# EUROPÄISCHE PATENTANMELDUNG

(11) **EP 4 667 622 A1**
(43) Veröffentlichungstag der Anmeldung: **24.12.2025**
(21) Anmeldenummer: 25184099.7
(22) Anmeldetag: 20.06.2025
(51) Int. Cl.: C25B 1/04, C25B 11/052, C25B 11/081, C25B 11/093, H01M 4/86, H01M 4/92, H01M 8/0245, C25B 11/032, H01M 8/0232

(54) **GASDIFFUSIONSELEKTRODE, MEMBRAN-ELEKTRODEN-ANORDNUNG UND ELEKTROLYSEVORRICHTUNG**

(30) Priorität: 21.06.2024 DE 202024103377 U
(71) Anmelder: Melicon GmbH, 41836 Hückelhoven (DE)
(72) Erfinder: MÜLLER, Dr.-Ing. Ulrich, 41836 Hückelhoven (DE)
(74) Vertreter: Brinkmann & Partner

(57) **Zusammenfassung**

Die Erfindung betrifft eine Gasdiffusionselektrode (4, 5) für eine Membran-ElektrodenAnordnung zum Einsatz in einer Brennstoffzelle oder einer Elektrolysevorrichtung, aufweisend einen Verbund aus einer Mehrzahl von schichtweise angeordneten Streckmetalllagen (6, 7, 8), gekennzeichnet durch eine Vlieslage (9) aus Metallfasern, wobei eine dem Verbund zugewandte Oberfläche der Vlieslage (9) mit einer dem Verbund abgewandten Oberfläche einer einendseitig des Verbunds angeordneten äußeren Streckmetalllage (6) in Kontakt steht, wobei die dem Verbund abgewandte Oberfläche der Vlieslage (9) dazu dient, an der Membran (2) der Membran-ElektrodenAnordnung (1) anzuliegen.

## Beschreibung

Die Erfindung betrifft eine Gasdiffusionselektrode, auch Gasdiffusionslayer (GDE) genannt, für eine Membran-Elektroden-Anordnung (MEA) zum Einsatz in einer Brennstoffzelle, insbesondere einer Wasserstoff-Sauerstoff-Brennstoffzelle, oder einer Elektrolysevorrichtung, aufweisend einen Verbund aus einer Mehrzahl von schichtweise angeordneten Streckmetalllagen. Ferner betrifft die Erfindung eine Membran-Elektroden-Anordnung mit zwei erfindungsgemäßen Gasdiffusionselektroden und eine Elektrolysevorrichtung mit einer erfindungsgemäßen Membran-Elektroden-Anordnung.

Gasdiffusionselektroden sind aus dem Stand der Technik an sich bekannt. Sie finden bei der Durchführung elektro-chemischer Prozesse Verwendung, so zum Beispiel in Brennstoffzellen oder in als Membranelektrolyseur ausgebildeten Elektrolysevorrichtungen.

Aus der DE 100 27 339 A1 ist eine Gasdiffusionselektrode bekannt, die aus einem elektrisch leitenden Katalysatorträger und einem Elektroanschluss besteht, wobei der Katalysatorträger der Aufnahme von Katalysatormaterial dient. Als Katalysatorträger kommt ein Gewebe, Vlies, Schaum oder Filz aus elektrisch leitendem Material, eine Streckmetallplatte oder eine mit einer Vielzahl von Öffnungen versehene Metallplatte zum Einsatz, auf der das Katalysatormaterial aufgebracht ist. Dabei ist der Katalysatorträger zur Ausbildung einer dimensionsstabilen Gasdiffusionselektrode mit einer gasdurchlässigen metallischen Grundplatte, insbesondere aus Nickel oder seinen Legierungen mechanisch und elektrisch leitend mittels Versintern fest verbunden. Von Vorteil dieser Ausgestaltung ist, dass trotz der offenen Struktur des Katalysatorträgers zur Aufnahme des Katalysatormaterials eine vergleichsweise formstabile Gasdiffusionselektrode bereitgestellt ist, was durch die vergleichsweise steife Unterstruktur der Grundplatte erreicht ist, die beim Einpressen des Katalysatormaterials die Funktion eines Widerlagers übernimmt.

Die DE 10 2004 023 161 A1 offenbart eine Elektrolysezelle, die zur Bereitstellung eine Elektrode mit großer spezifischer Oberfläche vorschlägt, die Katoden und/oder Anoden als Mehrlagen-Streckmetall-Elektroden auszubilden, die aus mindestens zwei miteinander und mit einer Randelektrode über interne Widerstandsstrecken kontaktierte Streckmetall-Lagen bestehen. Die Streckmetall-Lagen liegen jeweils auf Grundplatten auf und sind in einem Zellentrog oder in mehreren miteinander verspannten Elektrodenrahmen angeordnet. Zur weiteren Vergrößerung der spezifischen Elektrodenoberfläche sind zwischen den Streckmetall-Lagen vorzugsweise poröse Zwischenlagen angeordnet.

Aus der DE 197 29 429 C1 ist eine Elektrolysevorrichtung bekannt, die eine Anzahl von Membran-Elektrolyse-Zellen aufweist, von denen jede eine beidseitig mit einer Kontaktschicht versehene Membran umfasst. Damit die Elektrolysevorrichtung bei kompakter Bauweise auch für vergleichsweise hohe Wasserstoffproduktionsraten geeignet und somit besonders flexibel einsetzbar ist, ist an jeder Kontaktschicht jeweils eine Kontaktplatte angeordnet, wobei jede Kontaktplatte auf ihrer der ihr zugeordneten Kontaktschicht zugewandten Oberfläche eine Kanalsystem zum Transport von Wasser und/oder Gas aufweist.

Aus der EP 2 985 096 B1 ist eine Gasdiffusionselektrode bekannt, welche eine Mehrzahl von Streckmetalllagen aufweist. Die Streckmetalllagen können dabei mit Bezug auf Ihre Längserstreckung im rechten Winkel zueinander angeordnet sein.

Aus der DE 10 2018 105 115 A1 ist eine Elektrode für eine elektrochemische Zelle, insbesondere für einen Elektrolyseur, bekannt, die ein Trägerelement mit einer mindestens einen Katalysator enthaltenden aktiven Schicht aufweist, welche aktive Schicht eine Anlagefläche zum Anlegen an eine lonenaustauschmembran definiert. Dabei ist vorgesehen, dass die aktive Schicht zur Ausbildung eines Protonenaustauschmembran-Elektrolyseurs Pt, Ir, Ru oder Oxide dieser Elemente und Verbindungen enthält.

Die DE 10 2018 132 399 A1 offenbart einen Gasdiffusionskörper, der gemäß einer Ausführungsform einen Verbund von einer Mehrzahl von schichtweise angeordneten Streckmetalllagen aufweist. Als alternative Ausführungsformen werden mehrlagige leitende Gewebe oder Gitter genannt. Der aus der DE 10 2018 132 399 A1 vorbekannte Verbund weist dabei eine ein- oder mehrschichtige Beschichtung auf, wobei die Beschichtung im Wesentlichen aus elektrisch leitenden Partikeln, insbesondere aus Titanpartikeln besteht, und Zusätze in Form von Platin- oder Iridiumpartikeln enthalten kann. Der Gasdiffusionskörper der DE 10 2018 132 399 A1 stellt nicht selbst eine Elektrode dar, sondern ist als zusätzliche Schicht zwischen einer Bipolarplatte und einer Elektrode vorgesehen.

Die EP 3 670 703 A1 betrifft einen Gasdiffusionskörper umfassend zumindest eine Durchgangsöffnungen aufweisende Basisschicht, die aus elektrisch leitendem Streckmetall, aus elektrisch leitendem Gewebe oder Gitter oder aus einer elektrisch leitenden, mit Durchgangsöffnungen versehenen Metallplatte hergestellt ist, wobei der Gasdiffusionskörper zumindest eine Zusatzschicht aufweist, die als pulverförmiges Material unter Einsatz eines thermischen Spritzverfahrens aufgetragen ist, wobei das pulverförmige Material zumindest zum Großteil aus Partikeln aus elektrisch leitendem Material besteht, insbesondere zu einem Anteil von wenigstens 70 Gew.-%, bevorzugt zu einem Anteil von wenigstens 90 Gew.-%.

Darüber hinaus ist aus der DE 10 2022 130 553 A1 eine Gasdiffusionselektrode bekannt, bei der ein Verbund aus Streckmetalllagen einendseitig mit einer äußeren Streckmetalllage an einer lonenaustauschmembran anliegt. Die Streckmetalllagen sind dabei wenigstens bereichsweise mit einer elektrisch leitenden Beschichtung versehen.

Aus dem Stand der Technik ist gemäß der DE 10 2020 109 430 A1 ferner eine Bipolarplattenanordnung für die Anwendung in einer Brennstoffzelle oder einer Elektrolysevorrichtung bekannt. Die Bipolarplattenanordnung weist dabei im Ausführungsbeispiel eine Strömungsverteileinheit auf, die aus einem Verbund aus einer Mehrzahl von schichtweise angeordneten Streckmetalllagen gebildet ist. Die Lagen können dabei grundsätzlich auch aus metallischen Geweben und/oder Vliesen gebildet sein. Eine Gasdiffusionselektrode offenbart die DE 10 2020 109 430 A1 aber nicht.

Obgleich Brennstoffzellen und Elektrolysevorrichtungen sowie darin zum Einsatz kommende Gasdiffusionselektroden in vielerlei Ausgestaltungsformen bekannt sind, besteht Verbesserungsbedarf.

Es ist deshalb die **Aufgabe** der Erfindung, eine neuartige Gasdiffusionselektrode vorzuschlagen, die hinsichtlich des Wirkungsgrades, des Materialbedarfs und der Beständigkeit verbessert ist.

Zur **Lösung** dieser Aufgabe wird mit der Erfindung vorgeschlagen eine Gasdiffusionselektrode der eingangs genannten Art, die sich dadurch auszeichnet, dass eine Vlieslage aus Metallfasern vorgesehen ist, wobei eine dem Verbund zugewandte Oberfläche der Vlieslage mit einer dem Verbund abgewandten Oberfläche einer einendseitig des Verbunds angeordneten äußeren Streckmetalllage in Kontakt steht, wobei die dem Verbund abgewandte Oberfläche der Vlieslage dazu dient, an der Membran der Membran-Elektroden-Anordnung anzuliegen.

Es hat sich gezeigt, dass die erfindungsgemäße Zwischenordnung einer (einzigen) Vlieslage zwischen Streckmetallverbund und Membran der MEA hinsichtlich der aus dem Stand der Technik bekannten Gasdiffusionselektrode besondere, nicht vorhersehbare Vorteile erbringt. Insbesondere zeichnet sich die erfindungsgemäße Gasdiffusionselektrode durch einen hohen Wirkungsgrad und hohe chemische Beständigkeit bei gleichzeitig vermindertem Ressourcenverbrauch. So ist es zum einen möglich, die Anzahl der im Stand der Technik benötigten Streckmetalllagen zu reduzieren, ohne dass dies zu Einbußen beim Wirkungsgrad führen würde. Dies ist insoweit von Vorteil, da der Materialbedarf zur Herstellung der bestimmungsgemäßen Vlieslage geringer ist, als der Materialbedarf der für die Herstellung einer bestimmungsgemäßen Streckmetalllage notwendig ist. Es hat sich ferner im Vergleich mit aus dem Stand der Technik Gasdiffusionselektroden, deren membranseitige Streckmetalllage mit einer elektrisch leitfähigen Beschichtung versehen ist, die Materialbedarf an Beschichtungsmaterial wie etwa Iridiumoxid bei im Wesentlichen gleichem Wirkungsgrad geringer sein kann. Im Ergebnis wird mit der Erfindung daher eine Gasdiffusionselektrode bereitgestellt, die einen hohen Wirkungsgrad aufweist, korrosionsbeständig ist und günstiger und mit weniger Aufwand herzustellen ist, da wenigstens teils nur schwierig in ausreichenden Mengen beschaffbares Material verwendet werden muss.

Gemäß einem bevorzugten Merkmal der Erfindung ist vorgesehen, dass diejenigen Fasern und/oder Faserabschnitte, die im Bereich der dem Verbund abgewandten Oberfläche der Vlieslage angeordnet sind, mit einer elektrisch leitfähigen Beschichtung versehen sind. Bei der dem Verbund abgewandten Oberfläche der Vlieslage handelt es sich um diejenige Oberfläche der Vlieslage, die in Einbaulage der Membran der MEA zugewandt ist und an dieser anliegt. Vorzugsweise ist die Beschichtung aus Gold, Silber, Palladium, Platin, Rhodium, Iridium, Rhenium, Ruthenium, Molybdän, Wolfram, Nickel oder einer Verbindung mit mindestens einem dieser Metalle gebildet. Vorzugsweise sind diese Verbindungen durch die Oxide der Metalle gebildet. Insbesondere bevorzugt ist Palladiumoxid, Platinoxid, Rhodiumoxid, Iridiumoxid, Rheniumoxid oder Rutheniumoxid. Der Begriff "-oxid" wird im Sinne der Erfindung als Oberbegriff für alle Oxide des betreffenden Metalls verwendet. Besonderes bevorzugte Oxide sind in dieser Hinsicht Palladium(II)-Oxid, Platin(IV)-Oxid, Iridium(IV)-Oxid, Iridium(VI)-Oxid, Rhodium(III)-Oxid, Rhenium(VI)-Oxid, Rhenium(VII)-Oxid, Ruthenium(IV)-Oxid. Alle vorgenannten Metalle oder metallische Verbindungen haben in wenigstens einem der vorgenannten Bereiche Katalyse, Korrosionsschutz oder elektrische Leitfähigkeit besonders vorteilhafte Eigenschaften. Besonders bevorzugt ist die Beschichtung aus Iridiumoxid, insbesondere Iridium(IV)-Oxid und/oder Iridium(VI)-Oxid, oder Platinoxid und/oder einer anderen iridiumhaltigen oder platinhaltigen Verbindung gebildet. Dies hat verschiedene Vorteile. Eine solche Beschichtung mit Iridiumoxid oder Platinoxid ist mit Bezug auf die bei einer Elektrolyse in einer Elektrolysevorrichtung, insbesondere der Wasserelektrolyse, ablaufenden Reaktionen besonders vorteilhaft und erbringt sowohl katalytische, antikorrosive und leitfähigkeitsbezogene Verbesserungen. Auf diesem Wege können Wirkungsgrad und Beständigkeit der erfindungsgemäßen Elektrode verbessert werden. Es hat sich dabei herausgestellt, dass die bevorzugte Beschichtung aus Iridiumoxid oder Platinoxid der Fasern und/oder Faserabschnitte, die sich im Bereich der Oberfläche befinden, den Materialbedarf an Beschichtungsmaterial signifikant reduziert, ohne dass insbesondere der Wirkungsgrad beeinträchtigt wird. Bei Iridium handelt es sich jedoch bekanntermaßen um ein vergleichsweise seltenes Element, dessen Fördermenge auf unabsehbare Zeit begrenzt ist. Es ist deshalb vorzugsweise vorgesehen, dass ausschließlich die dem Verbund abgewandte Oberfläche der äußeren Streckmetalllage mit der Beschichtung, insbesondere Iridiumoxid, beschichtet ist. Eine solchermaßen beschichtete Vlieslage führt in diesem Sinne zu einer zu einer in vorteilhafter Weise besonders ressourcenschonend herstellbaren Gasdiffusionselektrode.

Es kann zur weiteren Ressourcenschonung bevorzugt vorgesehen sein, dass diejenigen Fasern und/oder Faserabschnitte, die im Bereich der dem Verbund zugewandten Oberfläche der Vlieslage angeordnet sind, unbeschichtet ausgebildet sind. Bei der dem Verbund zugewandten Oberfläche der Vlieslage handelt es sich um diejenige Oberfläche der Vlieslage, die in Einbaulage der Membran der MEA abgewandt ist und an der äußeren vlieslagenseitigen Streckmetalllage des Verbunds anliegt.

Alternativ können katalytische Eigenschaften, Korrosionsbeständigkeit und Leitfähigkeit weiter verbessert werden, wenn auch diejenigen Fasern und/oder Faserabschnitte, die im Bereich der dem Verbund zugewandten Oberfläche der Vlieslage angeordnet sind, mit Gold, Silber, Palladium, Platin, Rhodium, Iridium, Rhenium, Ruthenium, Molybdän, Wolfram, Nickel oder einer Verbindung mit mindestens einem dieser Metalle beschichtet sind. Auch in diesem Fall ist die Beschichtung mit Iridiumoxid oder Platinoxid besonders bevorzugt. Auch in diesem Fall ist der Materialbedarf an Beschichtungsmaterial im Vergleich noch geringer, als wenn die membranseitige äußere Streckmetalllage - wie dies im Stand der Technik vorgesehen ist - mit einer Beschichtung versehen wird.

Die erfindungsgemäße Gasdiffusionselektrode verfügt über einen Verbund aus einer Mehrzahl von schichtweise angeordneten Streckmetalllagen. Dabei meint "Streckmetall" eine mit Öffnungen in der Oberfläche ausgebildete Metalltafel, wobei die Öffnungen, auch Maschen genannt, durch versetzte Schnitte ohne Materialverlust unter gleichzeitig streckender Verformung der Metalltafel entstehen. Mehrere Lagen Streckmetall bilden die erfindungsgemäße Gasdiffusionselektrode aus, wobei jeweils benachbarte Streckmetalllagen miteinander verschweißt sind. Es ist so ein formstabiler Verbund aus einer Mehrzahl von Streckmetalllagen gegeben, wobei je nach späterem Verwendungszweck der Gasdiffusionselektrode zwei, drei, vier, fünf, sechs oder noch mehr Streckmetalllagen vorgesehen sein können.

Gemäß einem bevorzugten Merkmal der Erfindung ist vorgesehen, dass die mit der Vlieslage in Kontakt stehende äußere Streckmetalllage des Verbunds entweder unbeschichtet ausgebildet ist oder nur teilweise mit Gold, Silber, Palladium, Platin, Rhodium, Iridium, Rhenium, Ruthenium, Molybdän, Wolfram, Nickel oder einer Verbindung mit mindestens einem dieser Metalle beschichtet ist. Durch die erfindungsgemäße Vlieslage kann die Beschichtung der Streckmetalle, insbesondere im Falle der Beschichtung der Vlieslage reduziert oder ganz entbehrlich werden, wodurch weiteres Beschichtungsmaterial eingespart werden kann.

Ferner erlaubt die bevorzugte Beschichtung der membranseitigen Oberfläche der Vlieslage mit Iridiumoxid oder Platinoxid, alle Streckmetalllagen des Verbunds vollständig unbeschichtet auszubilden. Es hat sich gezeigt, dass der ohmsche Widerstand in einer MEA seinen Maximalwert an der Grenzschicht zwischen äußerer Vlieslage und Membran erreicht, während er mit zunehmendem Abstand zu der Membran abnimmt. Eine entsprechende Beschichtung in gerade diesem Grenzbereich hat daher eine erhebliche Reduzierung des ohmschen Widerstands und eine damit verbundene Steigerung der Leitfähigkeit zur Folge. Eine Beschichtung der Streckmetalllagen hat insoweit im Vergleich einen geringeren Effekt auf die Leitfähigkeit der MEA. Hierdurch werden die mit der in Bezug genommenen Beschichtung zusammenhängenden Vorteile hinsichtlich Katalyse, Korrosionsschutz und insbesondere Leitfähigkeit in ausreichendem Maße, jedoch besonders ressourcenschonender erreicht.

Gemäß einem bevorzugten Merkmal der Erfindung ist vorgesehen, dass der Verbund durch zumindest bereichsweise unbeschichtete Streckmetalllagen oder gänzlich unbeschichtete Streckmetalllagen gebildet ist, wobei zur Bildung des Verbunds beschichtete und zumindest bereichsweise unbeschichtete Streckmetalllagen oder gänzlich unbeschichtete Streckmetalllagen miteinander verschweißt oder verpresst sind.

Gemäß einem bevorzugten Merkmal der Erfindung ist vorgesehen, dass die jeweiligen einander zugewandten Oberflächen der äußeren Streckmetalllage einerseits und der Vlieslage andererseits miteinander durch Schweißen, Sinterung und/oder Pressung verbunden sind.

Die miteinander verbundenen Streckmetalllagen und die Vlieslage bilden in vorteilhafter Weise eine glatte, ebene und stabile Auflage für die protonenleitende Membran der Membran-Elektroden-Anordnung. Diese Membran befindet sich im endmontierten Zustand der Membran-Elektroden-Anordnung zwischen zwei erfindungsgemäßen Gasdiffusionselektroden, wobei die eine der beiden Gasdiffusionselektroden im Falle beispielsweise der Wasserelektrolyse aus Titan (Sauerstoff-Seite) und die andere Gasdiffusionselektrode aus Edelstahl (Wasserstoff-Seite) gebildet ist. **In** Entsprechung dessen ist es gemäß einem bevorzugten Merkmal der Erfindung vorgesehen, dass die Vlieslage, insbesondere im Bereich der dem Verbund abgewandten Oberfläche der Vlieslage, Fasern und/oder Faserabschnitte aus Titan oder Edelstahl aufweist. Besonders bevorzugt ist sie vollständig aus Titanfasern oder Edelstahlfasern gebildet ist.

Benachbarte Streckmetalllagen sind vorzugsweise in Kontaktpunkten ihrer einander zugewandten Flachseiten mittels Widerstands-Impulsschweißen flächenhaft miteinander verbunden. "Flächenhaft" im Sinne der Erfindung meint dabei aufgrund der Gitterausgestaltung der Streckmetalllagen nicht vollflächig. Es findet aber im Sinne einer flächenhaften Ausgestaltung eine Verbindung in den Kontaktpunkten zweier benachbarten Streckmetalllager statt, die sich infolge der Gitterausgestaltung der Streckmetalllagen regelmäßig über die gesamten einander zugewandten Flachseiten der Streckmetalllagen erstrecken. Es wird insofern nicht nur eine punktförmige Verbindung erreicht, sondern vielmehr eine solche, die insoweit flächenhaft ist, als dass sich in regelmäßiger Ausgestaltung zahllose Kontaktpunkte über die gesamte Oberfläche der einander in Kontakt stehenden Flachseiten benachbarter Streckmetalllagen ausbilden. Es wird so in vorteilhafter Weise ein sehr formstabiler Verbund an Streckmetalllagen bereitgestellt.

Gleiches gilt für die Verbindung zwischen der Vlieslage und der äußeren Streckmetalllage. Diese sind vorzugsweise in Kontaktpunkten ihrer einander zugewandten Flachseiten, insbesondere mittels Widerstands-Impulsschweißen, flächenhaft miteinander verbunden.

Die einzelnen Streckmetalllagen verfügen herstellungsbedingt über eine plastische Höhe, die größer ist, als die Blechdicke der als Ausgangsmaterial gewählten Metalltafeln. Diese plastische Höhe verleiht dem Streckmetall gewisse Federeigenschaften, die in vorteilhafter Weise bei einem Verbinden der Streckmetalllagen mittels Widerstands-Impulsschweißen erhalten bleibt. Die endfertig miteinander zu einem Verbund miteinander verschweißten Streckmetalllagen besitzen somit definierte Federeigenschaften, die sich anhand der Federkennlinien der einzelnen Streckmetalllagen berechnen und reproduzierbar ausbilden lassen. Es ist deshalb in vorteilhafterweise möglich, aufgrund der konstruktiven Ausgestaltung nach der Erfindung gezielt Einfluss auf die spätere Kontaktkraft zwischen Gasdiffusionselektrode einerseits und daran anliegender Membran andererseits mit dem Ziel Einfluss zu nehmen, dass ein dauerhaft vollflächiges und sicheres Anliegen der Membran an der oder den zugeordneten Gasdiffusionselektroden sichergestellt ist. Gegenüber dem aus dem Stand der Technik bekannten Sintern hat das Verbinden mittels Widerstands-Impulsschweißen zudem den Vorteil, dass sich Streckmetalllagenverbunde mit definierter Dicke, das heißt einem geringen Toleranzmaß herstellen lassen, beispielsweise einem Toleranzmaß von +/- 0,5 mm, vorzugsweise von +/- 0,3 mm, noch mehr bevorzugt von +/- 0,05 mm. Ein solch geringes Toleranzmaß erweist sich insbesondere bei der Verschaltung mehrerer Membran-Elektroden-Anordnungen zu einer Gesamtzelle als vorteilhaft, weil die sich negativ auf eine Membrankontaktierung auswirkenden Setzerscheinungen minimiert sind.

Es ist gemäß einem weiteren Merkmal der Erfindung vorgesehen, dass einige der Streckmetalllagen jeweils Maschen mit unterschiedlicher Maschenweite aufweisen. Je Streckmetalllage ist eine bestimmte Maschenweite vorgesehen. Diese Maschenweite kann von Streckmetalllage zu Streckmetalllage variieren. Diese Ausgestaltung ist insbesondere in zweierlei Hinsicht von Vorteil. Die wünschenswerterweise im bestimmungsgemäßen Verwendungsfall zu erreichende turbulente Fluiddurchströmung wird so unterstützt. Ferner kommt es zu einer verungleichmäßigten Verteilung der sich zwischen den einzelnen Streckmetalllagen ausbildenden Kontaktpunkten, was die Formstabilität des späteren Verbundes zusätzlich fördert.

Es ist gemäß einem weiteren Merkmal der Erfindung vorgesehen, dass die Maschen der mit der Vlieslage in Kontakt stehenden Streckmetalllage die kleinste Maschenweite aufweist. Demgemäß ist mithin vorgesehen, dass die im bestimmungsgemäßen Anwendungsfall mit der Vlieslage in Kontakt stehende Streckmetalllage ein möglichst feines Streckmetall aufweist. Es wird so der aufliegenden Vlieslage in vorteilhafter Weise eine möglichst glatte, gleichwohl aber poröse Oberfläche bereitgestellt.

Gemäß einem weiteren Merkmal wird in diesem Zusammenhang vorgeschlagen, dass die Maschengröße der Maschen der Streckmetalllagen in Schichtdickenrichtung auf die mit der Vlieslage in Kontakt stehenden Streckmetalllage abnimmt. Demgemäß kommen in den vlieslagenentfernten inneren Lagen des Verbunds gröbere Streckmetalle zum Einsatz, wobei sich die Maschenweite in Richtung auf die Vlieslage verringert, das heißt den gröberen Streckmetallen feinere Streckmetalle in Richtung auf die Vlieslage nachfolgen. Die Aufgabe der gröberen Streckmetalle ist es dabei, einerseits eine stabile und ebene Fläche auszubilden, andererseits aber auch eine gewisse Federwirkung aufzubauen. Diese Federwirkung entsteht durch ausgesuchte Streckmetallkombinationen und kann in einem weiten Bereich variiert werden. Es kann so gezielt Einfluss auf den Federkennwert des späteren Streckmetalllagenverbunds, das heißt der Gasdiffusionselektrode Einfluss genommen werden. Dabei ist die vom späteren Streckmetalllagenverbund ausgehende Federwirkung maßgeblich dafür, dass im späteren Verwendungsfall sichere Anliegen der Membranen an den zugehörigen Gasdiffusionselektroden sicherzustellen. Dabei erlaubt es die erfindungsgemäße Ausgestaltung aufgrund ihrer Konstruktion, diese Federwirkung sehr genau einzustellen, weshalb sich die erfindungsgemäßen Gasdiffusionselektroden insbesondere auch für die Hochdruckanwendung eignen, so zum Beispiel bei Drücken von über 30 bar, 40 bar, 50 bar und mehr.

Die Erfindung betrifft ferner eine Membran-Elektroden-Anordnung einer Brennstoffzelle, insbesondere einer Wasserstoff-Sauerstoff-Brennstoffzelle, oder einer Elektrolysevorrichtung, insbesondere einer Elektrolysevorrichtung für die Wasserelektrolyse, mit einer Membran, einer ersten Gasdiffusionselektrode gemäß der Erfindung und einer zweiten Gasdiffusionselektrode, welche beide jeweils an gegenüberliegenden Seiten der Membran anliegen. Es ist dabei bevorzugt, dass die Membran beidseitig mit einer Katalysatorschicht ausgerüstet ist und die erste Gasdiffusionselektrode und die zweite Gasdiffusionselektrode jeweils unter Zwischenordnung einer Katalysatorschicht an der Membran anliegen. Vorzugsweise ist auch die zweite Gasdiffusionselektrode durch eine erfindungsgemäße Gasdiffusionselektrode gebildet.

Darüber hinaus betrifft die Erfindung eine Elektrolysevorrichtung, insbesondere für die Wasserelektrolyse, mit einer Membran-Elektroden-Anordnung gemäß der Erfindung.

Weitere Merkmale und Vorteile der Erfindung ergeben sich aus der nachfolgenden Beschreibung anhand der Figuren. Dabei zeigen die Figuren in rein schematischer Darstellung gemäß
- Fig. 1: in einer Explosionsdarstellung eine Membran-Elektroden-Anordnung;
- Fig. 2: in einer Explosionsdarstellung eine Gasdiffusionselektrode;

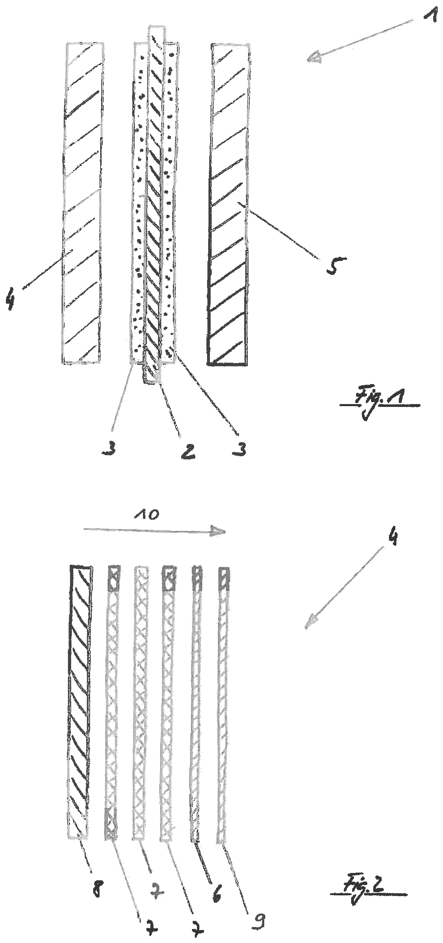

Fig. 1 lässt in rein schematischer Darstellung eine Membran-Elektroden-Anordnung 1 (auch membrane - electrode - assembly, kurz: MEA genannt) erkennen. Im dargestellten Ausführungsbeispiel verfügt die Membran-Elektroden-Anordnung 1 über eine Membran 2, die beidseitig mit einer Katalysatorschicht 3 ausgerüstet ist. Zu diesen Katalysatorschichten 3 benachbart sind eine erste erfindungsgemäße Gasdiffusionselektrode 4 und eine zweite erfindungsgemäße Gasdiffusionselektrode 5 vorgesehen. Dabei kann die Gasdiffusionselektrode 4 beispielsweise die Anodenseite und die Gasdiffusionselektrode 5 die Kathodenseite bilden.

Nach der Erfindung sind die Gasdiffusionselektroden 4 beziehungsweise 5 aus einzelnen Schichten von miteinander verschweißten Streckmetalllagen 6, 7, 8 und einer mit der Streckmetalllage 6 verschweißten Vlieslage 9 aus Metallfasern gebildet, wie dies beispielshaft anhand der Gasdiffusionselektrode 4 in Fig. 2 dargestellt ist.

Wie Fig. 2 erkennen lässt, verfügt die Gasdiffusionselektrode 4 im gezeigten Ausführungsbeispiel über insgesamt fünf Streckmetalllagen, wobei Streckmetalllagen mit unterschiedlich großen Maschen vorgesehen sind. Es ist eine Streckmetalllage 6 mit verhältnismäßig kleinen Maschenweiten, drei Streckmetalllagen 7 mit größeren Maschenweiten sowie eine Streckmetalllage 8 mit einer vergleichsweise groben Maschenweite vorgesehen. Dabei nimmt die Maschenweite von grob zu fein in Richtung des Pfeils 10, das heißt mit Bezug auf die Darstellung nach Fig. 1 in Richtung auf die an der Gasdiffusionselektrode im endmontierten Zustand anliegende Membran 2 ab.

Zu erkennen ist ferner eine Vlieslage 9. Die Vlieslage 9 ist im endmontierten Zustand der MEA der äußeren Streckmetalllage 6 einerseits und der Membran 2 andererseits zwischengeordnet. Sie dient dabei als elektrisch leitende Verbindungslage zwischen dem Streckmetallverbund und der protonenleitenden Membran 2.

Mit Bezug auf die Darstellung nach Figur 2 ist die dem Verbund abgewandte Oberfläche der Vlieslage 9 vollflächig mit Iridiumoxid beschichtet. Im Sinne der Erfindung bedeutet dies, dass die im Bereich dieser Oberfläche angeordneten Fasern und/oder Faserabschnitte beschichtet sind. Die im Bereich der Oberfläche angeordneten Fasern und Faserabschnitte bilden dabei der Natur eines Vlieses folgend, eine poröse Oberfläche aus.

Im vorliegenden Beispiel können die Streckmetalllagen 7, 8 bereichsweise mit Platin beschichtet und/oder unbeschichtet ausgebildet sein. Die äußere Streckmetalllage 6 kann ebenfalls unbeschichtet ausgebildet sein oder bereichsweise mit Platin oder Iridium beschichtet sein. Hierdurch kann der Bedarf an Beschichtungsmaterial signifikant gesenkt werden ohne, dass die übrigen Eigenschaften der Gasdiffusionselektrode wie etwa Wirkungsgrad und Korrosionsbeständigkeit wesentlich beeinträchtigt werden.

Insgesamt lässt sich hierdurch insbesondere die Leitfähigkeit des Streckmetallverbunds der Elektrode 4, 5 durch Senkung des ohmschen Widerstands verbessern. Insbesondere die Iridiumoxidbeschichtung der Vlieslage 9 hat überdies Vorteile mit Bezug auf Katalyse und Korrosionsbeständigkeit.

### Bezugszeichen

- 1: Membran-Elektroden-Anordnung
- 2: Membran
- 3: Katalysatorschicht
- 4: Gasdiffusionselektrode
- 5: Gasdiffusionselektrode
- 6: Streckmetalllage
- 7: Streckmetalllage
- 8: Streckmetalllage
- 9: Vlieslage
- 10: Pfeil

## Patentansprüche

1. Gasdiffusionselektrode (4, 5) für eine Membran-Elektroden-Anordnung zum Einsatz in einer Brennstoffzelle oder einer Elektrolysevorrichtung, aufweisend einen Verbund aus einer Mehrzahl von schichtweise angeordneten Streckmetalllagen (6, 7, 8), **gekennzeichnet durch** eine Vlieslage (9) aus Metallfasern, wobei eine dem Verbund zugewandte Oberfläche der Vlieslage (9) mit einer dem Verbund abgewandten Oberfläche einer einendseitig des Verbunds angeordneten äußeren Streckmetalllage (6) in Kontakt steht, wobei die dem Verbund abgewandte Oberfläche der Vlieslage (9) dazu dient, an der Membran (2) der Membran-Elektroden-Anordnung (1) anzuliegen.

2. Gasdiffusionselektrode nach Anspruch 1, **dadurch gekennzeichnet, dass** die Vlieslage (9), insbesondere im Bereich der dem Verbund abgewandten Oberfläche der Vlieslage (9), Fasern und/oder Faserabschnitte aus Titan oder Edelstahl aufweist.

3. Gasdiffusionselektrode nach Anspruch 1 oder 2, **dadurch gekennzeichnet, dass** diejenigen Fasern und/oder Faserabschnitte, die im Bereich der dem Verbund abgewandten Oberfläche der Vlieslage (9) angeordnet sind, mit einer elektrisch leitfähigen Beschichtung versehen sind.

4. Gasdiffusionselektrode nach Anspruch 3, **dadurch gekennzeichnet, dass** die Beschichtung aus Gold, Silber, Palladium, Platin, Rhodium, Iridium, Rhenium, Ruthenium, Molybdän, Wolfram, Nickel oder einer Verbindung mit mindestens einem dieser Metalle gebildet ist.

5. Gasdiffusionselektrode nach Anspruch 4, **dadurch gekennzeichnet, dass** die Verbindungen durch die Oxide der Metalle gebildet sind, wobei insbesondere Palladiumoxid, Platinoxid, Rhodiumoxid, Iridiumoxid, Rheniumoxid oder Rutheniumoxid bevorzugt sind.

6. Gasdiffusionselektrode nach einem der Ansprüche 1 bis 5, **dadurch gekennzeichnet, dass** diejenigen Fasern und/oder Faserabschnitte, die im Bereich der dem Verbund zugewandten Oberfläche der Vlieslage (9) angeordnet sind, unbeschichtet ausgebildet sind.

7. Gasdiffusionselektrode nach einem der Ansprüche 1 bis 6, **dadurch gekennzeichnet, dass** die jeweiligen einander zugewandten Oberflächen der äußeren Streckmetalllage (6) einerseits und der Vlieslage (9) andererseits miteinander durch Schweißen, Sinterung und/oder Pressung verbunden sind.

8. Gasdiffusionselektrode nach einem der Ansprüche 1 bis 7, **dadurch gekennzeichnet, dass** zur Bildung des Verbunds die Streckmetalllagen (6, 7, 8) miteinander verschweißt und verpresst sind.

9. Gasdiffusionselektrode nach einem der Ansprüche 1 bis 8, **dadurch gekennzeichnet, dass** einige der Streckmetalllagen (6, 7, 8) jeweils Maschen mit unterschiedlicher Maschenweite (W) aufweisen.

10. Gasdiffusionselektrode nach Anspruche 9, **dadurch gekennzeichnet, dass** die Maschenweite (W) der Maschen der Streckmetalllagen (6, 7, 8) in Schichtdickenrichtung (11) auf die mit der Vlieslage (9) verbundenen Streckmetalllage (6) abnimmt.

11. Gasdiffusionselektrode nach einem der vorhergehenden Ansprüche, **dadurch gekennzeichnet, dass** die Maschen der mit der der mit der Vlieslage (9) verbundenen Streckmetalllage (6) gegenüberliegenden Streckmetalllage (8) die größte Maschenweite aufweist.

12. Gasdiffusionselektrode nach einem der vorhergehenden Ansprüche, **dadurch gekennzeichnet, dass** die Schichtdicke der Vlieslage, insbesondere im verschweißten und/oder verpressten Zustand, geringer ist, als die Schichtdicke der mit ihr in Kontakt stehenden äußeren Streckmetalllage (6), insbesondere im verschweißten und verpressten Zustand der Streckmetalllagen (6, 7, 8) des Verbunds.

13. Membran-Elektroden-Anordnung einer Brennstoffzelle, insbesondere einer Wasserstoff-Sauerstoff-Brennstoffzelle, oder einer Elektrolysevorrichtung, insbesondere einer Elektrolysevorrichtung für die Wasserelektrolyse, mit einer Membran (2), einer ersten und zweiten Gasdiffusionselektrode (4, 5) gemäß einem der vorhergehenden Ansprüche 1 bis 12, welche beide jeweils mit der dem jeweiligen Verbund abgewandten Oberfläche der jeweiligen Vlieslage (9) an gegenüberliegenden Seiten der Membran (2) anliegen.

14. Membran-Elektrode-Anordnung gemäß Anspruch 13, **dadurch gekennzeichnet, dass** die Membran (2) beidseitig mit einer Katalysatorschicht (3) ausgerüstet ist und die erste Gasdiffusionselektrode (4) und die zweite Gasdiffusionselektrode (5) jeweils unter Zwischenordnung einer Katalysatorschicht (3) an der Membran (2) anliegen.

15. Elektrolysevorrichtung, insbesondere für die Wasserelektrolyse, mit einer Membran-Elektroden-Anordnung (1) gemäß einem der Ansprüche 13 oder 14.
